(19) **Europäisches Patentamt / European Patent Office / Office européen des brevets**

(11) **EP 4 711 337 A1**

(12) # DEMANDE DE BREVET EUROPEEN

(43) Date de publication:
**18.03.2026 Bulletin 2026/12**

(21) Numéro de dépôt: **24315422.6**

(22) Date de dépôt: **16.09.2024**

(51) Classification Internationale des Brevets (IPC):
**C01F 15/00** (2006.01)  **C01G 43/08** (2006.01)
**C01G 56/00** (2006.01)  **G21C 3/54** (2006.01)
**C01F 17/271** (2020.01)

(52) Classification Coopérative des Brevets (CPC):
**C01G 56/007; C01F 15/00; C01F 17/271; C01G 43/08; C01G 56/006; C01G 56/009; G21C 3/54**

(84) Etats contractants désignés:
**AL AT BE BG CH CY CZ DE DK EE ES FI FR GB GR HR HU IE IS IT LI LT LU LV MC ME MK MT NL NO PL PT RO RS SE SI SK SM TR**
Etats d'extension désignés:
**BA**
Etats de validation désignés:
**GE KH MA MD TN**

(71) Demandeur: **Naarea**
**92000 Nanterre (FR)**

(72) Inventeurs:
• **DELPECH, Sylvie**
  **91300 Massy (FR)**
• **LAMBERTIN, David**
  **92000 Nanterre (FR)**
• **LE, Thi Kim Khanh**
  **92000 Nanterre (FR)**
• **SAUZET, Hugo**
  **92000 Nanterre (FR)**

(74) Mandataire: **Yes My Patent**
**32 Boulevard Richard Lenoir**
**75011 Paris (FR)**

(54) **PROCÉDÉ DE SYNTHÈSE DE CHLORURE(S) D'ACTINIDE(S) À PARTIR D'OXYDE(S) D'ACTINIDE(S) PRÉSENT(S) DANS UN SEL FONDU**

(57)    La présente invention concerne un procédé de synthèse de chlorure(s) d'actinide(s) à partir d'oxyde(s) d'actinide(s) présent(s) dans un sel fondu, ledit procédé mettant en oeuvre un sel d'aluminium (I), un sel de silicium (II) et/ou un sel de béryllium (III), et au moins un sel de chlorure d'un métal alcalin et/ou alcalino-terreux. La présente invention concerne également l'utilisation d'un sel d'aluminium (I), un sel de silicium (II) et/ou un sel de béryllium (III), par exemple le chlorure d'aluminium $AlCl_3$, pour la synthèse de chlorure(s) d'actinide(s) à partir d'oxyde(s) d'actinide(s) dans un sel fondu combustible pour réacteurs de fission nucléaire à sels fondus (RSF).

**Description**

La présente invention concerne un procédé de synthèse de chlorure(s) d'actinide(s) à partir d'oxyde(s) d'actinide(s) présent(s) dans un sel fondu, ledit procédé comprenant la mise en oeuvre d'un sel d'aluminium (1), d'un sel de silicium (II) et/ou d'un sel de béryllium (III), et d'au moins un sel de chlorure d'un métal alcalin et/ou alcalino-terreux distinct des sels (1), (II) et (III). La présente invention concerne également l'utilisation des sels (1), (II) et/ou (III) pour la synthèse de chlorure(s) d'actinide(s) à partir d'oxyde(s) d'actinide(s) dans un sel fondu combustible pour réacteurs de fission nucléaire à sels fondus (RSF). Cette synthèse est par exemple réalisée à une température comprise entre 100 et 850°C, entre 120 et 500°C ou entre 150 et 300°C.

Les réacteurs de fission nucléaire à sels fondus (RSF), encore appelés en anglais « Molten Salt Reactors » (MFR) comprennent, d'une part un coeur de réacteur dans lequel un sel fondu combustible à base de noyaux lourds fissibles ou fissiles subit des réactions de fission nucléaire auto-entretenues, et d'autre part un échangeur primaire de chaleur dans lequel le sel combustible chaud cède de la chaleur à un sel fondu caloporteur. Dans un RSF, en sortie de coeur, le sel combustible fondu circule vers un échangeur de chaleur à l'intérieur duquel il transfère ses calories au sel fondu caloporteur, avant retour vers la cuve du réacteur. Le sel combustible fondu entre dans le coeur à température d'environ 500-550°C et en ressort à une température plus élevée d'environ 700-800 °C. La mise en oeuvre d'un RSF met donc en jeux deux types de sels : d'une part le sel combustible fondu qui comprend un combustible à base de noyaux lourds fissibles ou fissiles et, d'autre part un sel fondu caloporteur, qui lui ne comprend pas de combustibles.

Dans un RSF, les sels fondus comprennent au moins un sel, par exemple un chlorure ou un fluorure. Les sels sont à l'état solide (cristaux) à température ambiante et deviennent liquides au-delà de leur température de fusion. A la différence des sels fondus caloporteurs, les sels fondus combustibles comprennent de la matière nucléaire, notamment sous forme de chlorures ou fluorures d'actinides. Les chlorures et fluorures d'actinides doivent être synthétisés avant d'être introduits dans le réacteur RSF. Par exemple, la synthèse des chlorures d'actinides, notamment le chlorure de plutonium $PuCl_3$ et le chlorure d'uranium $UCl_3$, est réalisée à partir des oxydes correspondants, respectivement l'oxyde de plutonium $PuO_2$ et l'oxyde d'uranium $U_3O_8$ dans le cas du $PuCl_3$ et du $UCl_3$.

L'utilisation de RSF présente de nombreux atouts, notamment une sécurité intrinsèque améliorée et la réduction des déchets. Les réacteurs à sels fondus utilisent un combustible liquide pouvant être drainé dans un réservoir de sûreté en cas de panne, réduisant ainsi considérablement les risques de fusion du coeur. De plus, les sels fondus se dilatent quand la température augmente entrainant une diminution de la réaction de fission (coefficients de contre-réaction négatifs) ce qui apporte une sûreté intrinsèque à ce type de concept. Par ailleurs, les RSF utilisent plus efficacement le combustible et peuvent brûler des déchets nucléaires existants, diminuant ainsi la quantité de déchets radioactifs à long terme. Cependant, le développement de cette filière repose sur l'identification de solutions innovantes permettant d'améliorer la rentabilité du procédé et de faciliter sa mise en oeuvre.

Les inventeurs ont identifié un moyen d'abaisser la température de synthèse et de stabiliser les formes chlorures des actinides dans les sels, ce qui contribue à une amélioration de la rentabilité du procédé, tout en facilitant sa mise en oeuvre.

Dans le cadre de la présente invention :

- l'expression "compris entre ... et ..." (par exemple, une plage de valeurs) doit être entendue comme incluant les limites (par exemple, les valeurs limite de cette plage de valeurs) ;

- toute description en lien avec un mode de réalisation est applicable et interchangeable avec l'ensemble des autres modes de réalisation de l'invention ; et

- lorsqu'un élément ou un composant est inclus dans et/ou sélectionné dans une liste d'éléments ou de composants, il doit être compris que cet élément ou composant individuel peut être sélectionné et combiné avec d'autres éléments individuels, ou peut être sélectionné pour constituer un sous-groupe de deux ou plusieurs éléments ou composants explicitement énumérés ; également, tout élément ou composant cité dans une liste d'éléments ou de composants peut être omis de cette liste.

Un objet de la présente invention concerne un procédé de synthèse de chlorure(s) d'actinide(s) à partir d'oxyde(s) d'actinide(s) présent(s) dans un sel fondu, ledit procédé de synthèse mettant en oeuvre a) au moins un sel d'aluminium (1), un sel de silicium (II) et/ou un sel de béryllium (III), et b) optionnellement au moins un sel de chlorure d'un métal alcalin et/ou alcalino-terreux distinct des sels (1), (II) et/ou (III), ledit procédé comprenant la chloration de(s) l'oxyde(s) d'actinide(s) en chlorure(s) d'actinide(s) correspondant au sein dudit sel à l'état fondu.

Plus précisément, le procédé de la présente invention met en oeuvre au moins un sel d'aluminium (1), un sel de silicium (II) et/ou un sel de béryllium (III) (également appelé « sel a) » ci-après) :

$$M_{x1}Al_{y1}X_{z1} \qquad (I)$$

$$M_{x2}Si_{y2}X_{z2} \qquad (II)$$

$$M_{x3}Be_{y3}X_{z3} \qquad (III)$$

selon lesquelles :

M est un métal alcalin et/ou un alcalino-terreux, de préférence Na, K et/ou Li,
X est un halogène (i.e., Cl, F, I et Br), de préférence Cl ou F,

$0 \leq x1 \leq 10$, $1 \leq y1 \leq 2$, $1 \leq z1 \leq 13$, $0 \leq x2 \leq 10$, $1 \leq y2 \leq 2$, $4 \leq z2 \leq 14$, $0 \leq x3 \leq 10$, $1 \leq y3 \leq 2$, et $2 \leq z3 \leq 12$.

Le sel fondu peut également comprendre, de manière optionnelle, au moins un sel de chlorure d'un métal alcalin et/ou alcalino-terreux distinct des sels (1), (II) et/ou (III) (également appelé « sel b) » ci-après).

Les sels a) et b), lorsqu'il est présent, sont utilisés en combinaison au cours du procédé de la présente invention.

Le procédé de la présente invention comprend au moins la chloration de(s) l'oxyde(s) d'actinide(s) en chlorure(s) d'actinide(s) correspondant, cette chloration ayant lieu au sein du sel à l'état fondu. Le procédé de l'invention est en effet opéré au sein d'un sel à l'état fondu. En fonction des différents modes de réalisation décrits ci-après, le sel fondu comprend l(les)'oxyde(s) d'actinide(s), et possiblement les sels a) et b). Ces derniers peuvent être utilisés (ou introduits) au sein du procédé sous forme solide, liquide (ou fondue) ou sous forme gazeuse.

Les inventeurs se sont rendu compte que la présence du sel a) dans les sels fondus lors de la synthèse des chlorures d'actinides permettait de stabiliser les formes chlorures des actinides dans les sels. Les avantages de l'utilisation d'aluminium dans des sels fondus sont présentés plus en détail dans la description qui suit.

Le procédé de la présente invention est particulièrement adapté à la préparation de combustibles nucléaires pour réacteur RSF.

L'utilisation d'aluminium, de silicium et/ou de béryllium au cours de cette synthèse permet d'une part de baisser la température de synthèse, et donc une économie d'énergie, et d'autre part de stabiliser les formes chlorures des actinides dans les sels. Par ailleurs, l'utilisation d'aluminium, de silicium et/ou de béryllium permet de réduire ou d'éliminer l'utilisation des gaz chlorés toxiques tels que $Cl_2(g)$ ou $HCl(g)$ ainsi que la synthèse d'espèces gazeuses enrichies en chlore 37 qui sont parfois décrits en association avec ce type de réactions.

Selon un mode de réalisation, le sel a) est un sel d'aluminium (1) :

$$M_{x1}Al_{y1}X_{z1} \qquad (I)$$

selon laquelle :

M est un métal alcalin et/ou un alcalino-terreux, de préférence Na, K et/ou Li,
X est un halogène (i.e., Cl, F, I et Br), de préférence Cl ou F,
$0 \leq x1 \leq 10$, de préférence x 1 = 0 ou 1,
$1 \leq y1 \leq 2$, de préférence y1 = 1, et
$1 \leq z1 \leq 13$, de préférence $2 \leq z1 \leq 10$ ou $3 \leq z1 \leq 8$.

Des exemples de sels d'aluminium (1) sont notamment les chlorures suivants : $AlCl_3$, $Al_2Cl_6$, $KAlCl_4$, $NaAlCl_4$, et/ou $LiAlCl_4$.

Selon un mode de réalisation de la présente invention, l'aluminium est utilisé sous forme chlorure dans les sels fondus combustibles pour la synthèse de chlorure(s) d'actinide(s) à partir d'oxyde(s) d'actinide(s) et consomme les ions oxyde solubilisés selon l'une des réactions suivantes (eq. 1, eq. 2) :

$$3O^{2-} + 2Al^{3+} \leftrightarrow Al_2O_{3(s)} \qquad (eq.\ 1)$$

$$3O^{2-} + 2AlCl_{3(g)} \leftrightarrow Al_2O_{3(s)} + 6Cl^- \qquad (eq.\ 2)$$

Selon un autre mode de réalisation, le sel a) est un sel de silicium (II) :

$$M_{x2}Si_{y2}X_{z2} \qquad (II)$$

selon laquelle :

M est un métal alcalin et/ou un alcalino-terreux, de préférence Na, K et/ou Li,
X est un halogène (i.e., Cl, F, I et Br), de préférence Cl ou F,
$0 \leq x2 \leq 10$, de préférence x2= 0 ou 1,
$1 \leq y2 \leq 2$, de préférence y2= 1, et
$4 \leq z2 \leq 14$, de préférence $4 \leq z2 \leq 10$ ou $4 \leq z2 \leq 8$.

Des exemples de sels de silicium (II) sont notamment les chlorures $SiCl_4$, $KSiCl_5$, NaSiCls, et/ou LiSiCls.

Selon un autre mode de réalisation, le sel a) est un sel de béryllium (III) :

$$M_{x3}Be_{y3}X_{z3} \qquad (III)$$

selon laquelle :

M est un métal alcalin et/ou un alcalino-terreux, de préférence Na, K et/ou Li,
X est un halogène (i.e., Cl, F, I et Br), de préférence Cl ou F,
$0 \leq x3 \leq 10$, de préférence x3= 0 ou 1,
$1 \leq y3 \leq 2$, de préférence y3 = 2, et
$2 \leq z3 \leq 12$, de préférence $2 \leq z3 \leq 6$.

Des exemples de sels de béryllium (III) sont par exemple les chlorures $BeCl_2$, $KBeCl_3$, $NaBeCl_3$, et/ou $LiBeCl_3$.

Le procédé de la présente invention peut être opéré selon différentes modes de réalisation.

Selon un premier mode de réalisation, le procédé comprend la mise en contact de(s) l'oxyde(s) d'actinide(s) avec le sel a), et optionnellement le sel b), à l'état fondu. La mise en contact de(s) l'oxyde(s) d'actinide(s) avec ledit sel a), et optionnellement le sel b), à l'état fondu peut être réalisée à une température d'au moins 100°C, par exemple une température d'au moins 120°C ou d'au moins 150°C. Cette température peut notamment être choisie pour correspondre *a minima* à la température de fusion des sels constitutifs du sel fondu.

Selon un second mode de réalisation, le procédé comprend la préparation d'un mélange initial comprenant l(les)'oxyde(s) d'actinide(s), le sel a) et optionnellement le sel b), puis la montée en température du mélange initial. Dans ce cas, la montée en température peut être réalisée progressivement jusqu'à une température d'au moins 100°C, par exemple une température d'au moins 120°C ou d'au moins 150°C. Cette température peut notamment être choisie pour correspondre *a minima* à la température de fusion des sels constitutifs du sel fondu.

De manière générale, le procédé de la présente invention peut être opéré à une température comprise entre 100 et 800°C, par exemple entre 120 et 500°C ou entre 150 et 300°C.

Ledit procédé de synthèse de chlorure(s) d'actinide(s) de la présente invention est opéré en dehors du réacteur RSF. Il peut notamment être réalisé au sein d'un creuset, ledit creuset pouvant être placé dans un four permettant l'apport de chaleur nécessaire pour maintenir le sel sous forme fondu. Par exemple, la synthèse peut être opérée sous argon, dans un creuset en carbone vitreux, en alumine ou dans un creuset métallique (par exemple base nickel).

Selon un mode de réalisation préféré, la synthèse est opérée dans des conditions anhydrides, en présence d'un gaz inerte, par exemple choisi parmi l'argon, l'hélium, le krypton, le xénon, le diazote, ou le néon. Plus particulièrement, la synthèse de chlorure(s) d'actinide(s) selon la présente invention est préférentiellement réalisée sous argon, et celui-ci présente une pureté > 99,999 %.

Selon un mode de réalisation de la présente invention, la synthèse est opérée dans des conditions anhydre par bullage du gaz inerte dans le sel fondu.

Selon un mode de réalisation de la présente invention, le sel a) est utilisé en mélange avec le sel b). Le sel a) peut comprendre plusieurs composés distincts, et le sel b) peut comprendre également plusieurs composés distincts. Notamment, le sel a), par exemple le chlorure d'aluminium $AlCl_3$, peut être utilisé en mélange avec un, deux ou trois sels de chlorure d'un métal alcalin et/ou alcalino-terreux, constituant ainsi respectivement un mélange binaire, ternaire ou quaternaire de sels a) et b).

Plus particulièrement, le sel a), par exemple l'aluminium sous forme chlorure $AlCl_3$, peut être utilisé en mélange avec le chlorure de sodium NaCl, le chlorure de calcium $CaCl_2$, le chlorure de magnésium $MgCl_2$, le chlorure de potassium KCl, le chlorure de lithium LiCl, le chlorure de béryllium $BeCl_2$ ou un mélange de deux ou plusieurs de ces chlorures. Ainsi, selon ce mode de réalisation du procédé de synthèse, ledit sel fondu comprend a) du chlorure d'aluminium $AlCl_3$, ainsi que b) du chlorure de sodium NaCl, du chlorure de calcium $CaCl_2$, du chlorure de magnésium $MgCl_2$, du chlorure de potassium KCl, du chlorure de lithium LiCl, du chlorure de béryllium $BeCl_2$ ou un mélange de deux ou plusieurs de ces chlorures.

Selon un mode de réalisation du procédé de synthèse, le sel fondu comprend de 1 à 80 mol.% de sel a), par rapport au nombre total de moles de sels a) et b). Par exemple, le sel fondu peut comprendre de 5 à 65 mol.% de sel a), par

exemple d'AlCl$_3$, par rapport au nombre total de moles de sels a) et b).

Alternativement, le procédé de la présente invention est opéré en présence du sel a) uniquement. Autrement dit, le procédé de la présente invention ne met pas en oeuvre le sel b). Selon ce mode de réalisation, le sel a) peut notamment consister en le chlorure NaAlCl$_4$.

Selon un mode de réalisation, le procédé de l'invention met en oeuvre :

1) de 1 à 80 mol.% de sel a), par exemple 1 à 80 mol.% d'AlCl$_3$, par exemple de 5 à 65 mol.% de sel a), par exemple de 5 à 65 mol.% d'AlCl$_3$ ;

2) de 20 à 99 mol.% de chlorure de métal alcalin et/ou alcalino-terreux, par exemple de 35 à 95 mol.% de chlorure de métal alcalin et/ou alcalino-terreux,
par rapport au nombre total de moles de sels a) et b).

Selon un autre mode de réalisation, le sel fondu comprend (ou consiste en) :

1) de 1 à 80 mol.% d'AlCl$_3$, par exemple de 5 à 65 mol.% d'AlCl$_3$ ;

2) de 20 à 99 mol.% d'au moins un chlorure(s) de métal alcalin et/ou alcalino-terreux choisi parmi NaCl, CaCl$_2$, MgCl$_2$, KCl, LiCl, BeCl$_2$, par exemple de 35 à 95 mol.% d'au moins un de ces chlorure de métal alcalin et/ou alcalino-terreux, par exemple un, deux ou trois chlorure(s) et de préférence au moins NaCl,
par rapport au nombre total de moles d'AlCl$_3$ et de chlorure de métal alcalin et/ou alcalino-terreux dans le sel fondu.

Selon un autre mode de réalisation, le sel fondu comprend (ou consiste en) :

1) de 1 à 80 mol.% d'AlCl$_3$, par exemple de 5 à 65 mol.% d'AlCl$_3$ ;

2) de 20 à 99 mol.% de NaCl, par exemple de 35 à 95 mol.% de NaCl,
par rapport au nombre total de moles d'AlCl$_3$ et de chlorure de métal alcalin et/ou alcalino-terreux dans le sel fondu.

Selon un mode de réalisation préféré du procédé de la présente invention, le sel a) est de l'aluminium sous forme chlorure AlCl$_3$ et est utilisé en mélange avec le chlorure de sodium NaCl. Ainsi, selon ce mode de réalisation, le procédé de l'invention met en oeuvre un sel fondu consistant en un sel binaire NaCl-AlCl$_3$. Par ailleurs, selon ce mode de réalisation, le ratio molaire NaCL:AlCl$_3$ dans les sels binaires NaCl-AlCl$_3$ peut varier entre 20:80 et 99:1, par exemple entre 5:95 et 95:5 ou entre 10:90 et 90:10.

Selon un exemple de réalisation du procédé de l'invention, le procédé de l'invention met en oeuvre un sel fondu comprenant (ou consistant en) 35-50 mol.% de NaCl et 50-65 mol.% d'AlCl$_3$ (par exemple 40 mol.% NaCl et 60 mol.% AlCl$_3$). Le mélange des deux sels à une telle composition forme un eutectique qui fond à une température plus basse que les points de fusion individuels des composants purs. Un tel mélange est donc particulièrement avantageux.

Ainsi, l'utilisation de sel a), optionnellement en mélange avec le sel b), c'est-à-dire au moins un chlorure(s) de métal alcalin et/ou alcalino-terreux, permet non seulement de consommer les ions oxyde solubilisés au cours de la synthèse des chlorures d'actinides, mais également d'abaisser la température de fusion des sels fondus sur la base des propriétés thermiques des mélanges et ainsi de limiter les dépenses énergétiques nécessaires à la préparation des chlorures d'actinides. Par ailleurs, il permet de stabiliser les formes chlorures des actinides dans les sels.

La quantité molaire d'oxyde(s) d'actinide(s) impliqués dans le procédé de synthèse de la présente invention est typiquement d'au moins 1 mol.%, par rapport au nombre total de moles de sels a) et b). En particulier, la quantité molaire d'oxyde(s) d'actinide(s) impliqués dans le procédé de synthèse de la présente invention est typiquement d'au moins 5 mol.% ou d'au moins 10 mol.%. De préférence, entre 50 et 100 mol.% d'oxydes d'actinides sont mis en oeuvre dans le procédé de synthèse de la présente invention.

La quantité molaire de chlorures d'actinide(s) dans le sel fondu en fin de procédé de synthèse est typiquement d'au moins 1 mol.%, par rapport au nombre total de moles de sels a) et b). En particulier, la quantité molaire chlorures d'actinide(s) dans le sel fondu en fin de procédé de synthèse est typiquement d'au moins 5 mol.% ou d'au moins 10 mol.%. De préférence, entre 50 et 100 mol.% de chlorures d'actinide(s) sont présents dans le sel fondu en fin de procédé de synthèse.

Selon un mode de réalisation du procédé de synthèse de la présente invention, l'actinide est sélectionné dans le groupe consistant en l'uranium, le plutonium, l'américium et le thorium, seul ou en mélange. L'actinide est préférentiellement l'uranium et/ou le plutonium. L'actinide est encore plus préférentiellement un mélange d'uranium et de plutonium.

Selon un autre mode de réalisation préféré du procédé de la présente invention, l'aluminium sous forme chlorure AlCl$_3$ est utilisé en combinaison avec le chlorure de sodium NaCl et le chlorure de magnésium MgCl$_2$. Ainsi, selon ce mode de réalisation, le sel fondu consiste en un sel ternaire NaCl-MgCl$_2$-AlCl$_3$.

Selon un mode de réalisation du procédé de synthèse, l'oxyde d'actinide(s) comprend le dioxyde de plutonium PuO$_2$, le dioxyde d'uranium UO$_2$, le sesquioxyde d'uranium U$_3$O$_8$, l'oxyde de thorium ThO$_2$, l'oxyde d'américium AmO$_2$, ou un mélange de deux, trois, quatre ou cinq de ces oxydes. L'oxyde d'actinide(s) comprend préférentiellement un mélange d'oxyde de plutonium PuO$_2$ et d'oxyde d'uranium U$_3$O$_8$.

Selon un mode de réalisation du procédé de synthèse, le chlorure d'actinide(s) comprend le chlorure de plutonium PuCl$_3$, le chlorure d'uranium UCl$_4$, le chlorure d'uranium UCl$_3$, le chlorure de thorium ThCl$_4$, le chlorure d'américium AmCl$_3$, ou un mélange de deux, trois, quatre, cinq ou six de ces chlorures. Le chlorure d'actinide(s) comprend préférentiellement un mélange de chlorure de plutonium PuCl$_3$, de chlorure d'uranium UCl$_4$ et de chlorure d'uranium UCl$_3$.

La synthèse de chlorure(s) d'actinide(s) à partir d'oxyde(s) d'actinide(s) présent(s) dans un sel fondu selon la présente invention est typiquement opérée pendant un temps de réaction compris entre 30 minutes et 10 heures, par exemple entre 1 heure et 6 heures ou entre 3 heures et 5 heures.

Le procédé de la présente invention concerne préférentiellement la synthèse d'au moins deux chlorures d'actinides distincts à partir de leur oxyde d'actinide correspondant. Préférentiellement, il s'agit de chlorure de plutonium PuCl$_3$ et de chlorure d'uranium UCl$_3$ et UCl$_4$ (UCl$_4$ réduit en UCl$_3$ par ajout d'uranium métal ou autre métal réducteur). Les au moins deux oxydes d'actinides peuvent être ajoutés dans le sel fondu de manière séquencée, de manière simultanée ou de manière séparée.

Selon un autre mode de réalisation du procédé de la présente invention, ledit procédé comprend :

a) La synthèse d'un premier chlorure d'actinide par mise en contact de l'oxyde d'actinide correspondant (premier oxyde d'actinide) avec ledit sel à l'état fondu, puis

b) La synthèse d'un deuxième chlorure d'actinide par mise en contact de l'oxyde d'actinide correspondant (deuxième oxyde d'actinide) avec le sel fondu obtenu à l'étape a).

Selon ce mode de réalisation (synthèse séquencée), le premier oxyde d'actinide est ajouté au sel fondu, puis le deuxième oxyde d'actinide est ajouté lorsque le premier chlorure d'actinide est, au moins partiellement, ou totalement, synthétisé. Ce mode de réalisation peut comprendre une troisième sous-étape concernant l'ajout d'un troisième oxyde d'actinide.

Selon un autre mode de réalisation du procédé de la présente invention, ledit procédé comprend la synthèse simultanée d'un premier chlorure d'actinide et d'un deuxième chlorure d'actinide distinct, voire d'un troisième chlorure d'actinide, par mise en contact des oxydes d'actinides correspondants avec ledit sel à l'état fondu ou non fondu en une seule étape commune.

Selon un autre mode de réalisation du procédé de la présente invention (synthèse séparée), ledit procédé comprend :

a) La synthèse d'un premier chlorure d'actinide par mise en contact de l'oxyde d'actinide correspondant avec une première quantité de sel à l'état fondu,

b) La synthèse d'un deuxième chlorure d'actinide par mise en contact de l'oxyde d'actinide correspondant avec une deuxième quantité de sel à l'état fondu, et

c) Le mélange des sels fondus obtenus aux étapes a) et b).

Lorsque le procédé de synthèse concerne la préparation de deux (ou trois) chlorures d'actinides, le premier oxyde d'actinide peut être ajouté au sel fondu en une quantité molaire d'au moins 0,5 mol.%, au moins 5 mol.% ou au moins 10 mol.%, par rapport au nombre total de moles d'AlCl$_3$ et de chlorure de métal alcalin et/ou alcalino-terreux dans le sel fondu. Le deuxième oxyde d'actinide peut être ajouté au sel fondu en une quantité molaire d'au moins 0,5 mol.%, au moins 5 mol.% ou au moins 10 mol.%, par rapport au nombre total de moles d'AlCl$_3$ et de chlorure de métal alcalin et/ou alcalino-terreux dans le sel fondu.

Outre la chloration de(s) l'oxyde(s) d'actinide(s) en chlorure(s) d'actinide(s) correspondant, le procédé de l'invention peut également comprendre une ou plusieurs autres étapes, avant l'étape de chloration ou après l'étape de chloration.

Le sel a) peut être mis en oeuvre sous forme liquide, solide ou gazeuse dans le procédé de la présente invention. Le sel b), s'il est utilisé dans le procédé de l'invention, peut également être mis en oeuvre sous forme liquide ou solide dans le procédé de la présente invention.

Le procédé de l'invention peut notamment comprendre la préparation d'une poudre de sels a) et b) avant utilisation dans le procédé de synthèse de l'invention.

Le procédé de l'invention peut alternativement comprendre une étape consistant à faire fondre les sels a) et/ou b), avant utilisation dans le procédé de synthèse de l'invention. Le procédé de l'invention peut par exemple comprendre une étape consistant à faire fondre les sels a) et b), en mélange, puis à introduire l(les) oxyde(s) d'actinide(s) dans ledit sel fondu, en vue d'opérer le procédé de synthèse de l'invention.

Selon un mode de réalisation, le procédé de l'invention comprend l'introduction du sel a) dans le sel fondu, le sel fondu comprenant l(les) oxyde(s) d'actinide(s), le sel a) étant sous forme solide ou sous forme liquide. Selon ce mode de réalisation, le sel a) est seul ou en mélange avec le sel b), celui-ci étant également sous forme solide ou sous forme liquide.

Selon un mode de réalisation, le procédé de l'invention comprend l'introduction de(s) l'oxyde(s) d'actinide(s) au sein du sel a) à l'état fondu, le sel a) étant seul ou en mélange avec le sel b), celui-ci étant également sous forme solide ou sous forme liquide.

Selon un mode de réalisation, le procédé de l'invention comprend l'introduction du sel a), sous forme gazeuse au sein du sel à l'état fondu, ledit sel fondu comprenant l'oxyde(s) d'actinide(s).

Selon un mode de réalisation, le procédé de l'invention comprend l'introduction du sel a) sous forme gazeuse au sein du sel fondu, ledit sel fondu comprenant l(les)'oxyde(s) d'actinide(s) et le sel b).

Le procédé de la présente invention peut comprendre les opérations suivantes :

- une sous-étape de mélange, à l'état solide (poudre), des composés constitutifs du sel fondu ; et

- une sous-étape de chauffage dudit mélange obtenu à une température appropriée pour obtenir la fusion de ce mélange, qui peut être opérée en plusieurs sous-étapes dont les conditions de température, atmosphère (utilisation de gaz inerte ou non, type de gaz inerte employé) et durée sont ajustées pour aboutir à la fusion complète des sels présents.

Selon une deuxième variante, l'étape de préparation susmentionnée peut comprendre les opérations suivantes :

- une sous-étape de mélange, à l'état solide (poudre), des composés constitutifs du sel fondu et d'au moins un oxyde d'actinide ; et

- une sous-étape de chauffage dudit mélange obtenu à une température appropriée pour obtenir la fusion de ce mélange, qui peut être opérée en plusieurs sous-étapes dont les conditions de température, atmosphère (utilisation de gaz inerte ou non, type de gaz inerte employé) et durée sont ajustées pour aboutir à la fusion complète des sels présents.

Selon un autre mode de réalisation du procédé de la présente invention, ledit procédé comprend une étape de purification du(des) chlorure(s) d'actinide(s). La purification du(des) chlorure(s) d'actinide(s) peut, par exemple, comprendre l'évaporation du sel a) résiduel, par exemple de l'$AlCl_3$ résiduel, et la filtration de l'oxyde de sel a) correspondant, par exemple l'oxyde d'aluminium $Al_2O_3$.

L'étape de filtration peut être réalisée au moyen d'équipements typiquement utilisés pour la filtration des espèces concernées.

L'étape d'évaporation peut notamment consister à augmenter la température du sel jusqu'à une température supérieure à 600°C (par exemple 700 or 750°C) et maintenir cette température pendant une durée d'au moins 10 heures (par exemple 12 heures ou 15 heures) sous gaz inerte (par exemple Argon), par exemple par bullage dans le sel fondu.

La présente invention concerne en outre l'utilisation d'un sel d'aluminium (1), d'un sel de silicium (II) et/ou d'un sel de béryllium (III) pour la synthèse de chlorure(s) d'actinide(s) à partir d'oxyde(s) d'actinide(s) dans un sel fondu combustible pour réacteurs de fission nucléaire à sels fondus (RSF). Le sel peut notamment être utilisé afin d'éviter l'utilisation des gaz toxiques utilisés habituellement dans ce type de synthèse. Il peut être utilisé pour abaisser la température de synthèse. Enfin il peut être utilisé pour stabiliser les formes chlorures des actinides dans les sels. Le sel d'aluminium (1), sel de silicium (II) et/ou sel de béryllium (III) sont tels que définis précédemment. Notamment, il s'agit préférentiellement d'au moins un sel choisi parmi le chlorure d'aluminium $AlCl_3$, le chlorure d'aluminium $Al_2Cl_6$, le chlorure d'aluminium $KAlCl_4$, le chlorure d'aluminium $NaAlCl_4$, le chlorure d'aluminium $LiAlCl_4$, le chlorure de béryllium $BeCl_2$, le chlorure de béryllium $KBeCl_3$, le chlorure de béryllium $NaBeCl_3$, le chlorure de béryllium $LiBeCl_3$, ou un mélange de deux ou plusieurs de ces chlorures.

## ASPECTS DE LA PRESENTE INVENTION

La présente invention concerne en particulier les aspects suivants :

Aspect 1. Procédé de synthèse de chlorure(s) d'actinide(s) à partir d'oxyde(s) d'actinide(s) présent(s) dans un sel fondu, ledit procédé comprenant la mise en oeuvre :

a) au moins un sel d'aluminium (1), un sel de silicium (II) et/ou un sel de béryllium (III) :

$$M_{x1}Al_{y1}X_{z1} \qquad (I)$$

$$M_{x2}Si_{y2}X_{z2} \qquad (II)$$

$$M_{x3}Be_{y3}X_{z3} \qquad (III)$$

selon lesquelles :

M est un métal alcalin et/ou un alcalino-terreux, de préférence Na, K et/ou Li,

X est un halogène (i.e., Cl, F, I et Br), de préférence Cl ou F,

$0 \leq x1 \leq 10$, $1 \leq y1 \leq 2$, $1 \leq z1 \leq 13$, $0 \leq x3 \leq 10$, $1 \leq y3 \leq 2$, $2 \leq z3 \leq 12$, $0 \leq x2 \leq 10$, $1 \leq y2 \leq 2$, et $4 \leq z2 \leq 14$, et

b) optionnellement au moins un sel de chlorure d'un métal alcalin et/ou alcalino-terreux distinct des sels (1), (II) et/ou (III),
ledit procédé comprenant la chloration de(s) l'oxyde(s) d'actinide(s) en chlorure(s) d'actinide(s) correspondant, au sein dudit sel à l'état fondu.

Aspect 2. Procédé selon l'aspect 1, selon lequel le sel a) est mis en oeuvre sous forme solide (poudre) ou sous forme liquide, seul ou en mélange avec le sel b), celui-ci étant également sous forme solide (poudre) ou sous forme liquide.

Aspect 3. Procédé selon l'aspect 1, selon lequel le sel a) est mis en oeuvre sous forme gazeuse au sein du sel à l'état fondu.

Aspect 4. Procédé selon l'aspect 1, comprenant l'introduction du sel a) sous forme gazeuse au sein du sel fondu, ledit sel fondu comprenant l'oxyde(s) d'actinide(s) et le sel b).

Aspect 5. Procédé selon l'une quelconque des aspects précédents, selon lequel le sel fondu comprend de 1 à 80 mol.% de sel a), par rapport au nombre total de moles de sels a) et b).

Aspect 6. Procédé selon l'une quelconque des aspects précédents, selon lequel le sel a) est choisi parmi le chlorure d'aluminium $AlCl_3$, le chlorure d'aluminium $Al_1Cl_6$, le chlorure d'aluminium $KAlCl_4$, le chlorure d'aluminium $NaAlCl_4$, le chlorure d'aluminium $LiAlCl_4$, le chlorure de béryllium $BeCl_2$, le chlorure de béryllium $KBeCl_3$, le chlorure de béryllium $NaBeCl_3$, le chlorure de béryllium $LiBeCl_3$, ou un mélange de deux ou plusieurs de ces chlorures.

Aspect 7. Procédé selon l'une quelconque des aspects précédents, selon lequel le sel b) est choisi parmi le chlorure de sodium $NaCl$, le chlorure de calcium $CaCl_2$, le chlorure de magnésium $MgCl_2$, le chlorure de potassium $KCl$, le chlorure de lithium $LiCl$, le chlorure de béryllium $BeClz$, ou un mélange de deux ou plusieurs de ces chlorures.

Aspect 8. Procédé selon l'une quelconque des aspects précédents, selon lequel l'actinide est choisi parmi l'uranium, le plutonium, l'américium et le thorium, seul ou en mélange.

Aspect 9. Procédé selon l'une quelconque des aspects précédents, selon lequel l(les)'oxyde(s) d'actinide(s) est(sont) choisi(s) parmi l'oxyde de plutonium $PuO_2$, l'oxyde d'uranium $UO_2$, l'oxyde d'uranium $U_3O_8$, l'oxyde de thorium $ThO_2$, l'oxyde d'américium $AmO_2$, seul ou en mélange, par exemple un mélange de deux ou trois de ces oxydes.

Aspect 10. Procédé selon l'une quelconque des aspects précédents, selon lequel le(s) chlorure(s) d'actinide(s) est(sont) choisi(s) parmi le chlorure de plutonium $PuCl_3$, le chlorure d'uranium $UCl_4$, le chlorure d'uranium $UCl_3$, le chlorure de thorium $ThCl_4$, le chlorure d'américium $AmCl_3$, seul ou en mélange, par exemple un mélange de deux ou trois de ces chlorures.

Aspect 11. Procédé selon l'une quelconque des aspects précédents, caractérisé en ce que la synthèse est opérée à une température comprise entre 100 et 850°C, entre 120 et 500°C ou entre 150 et 300°C.

Aspect 12. Procédé selon l'une quelconque des aspects précédents, comprenant une étape de purification du(des) chlorure(s) d'actinide(s), ladite purification comprenant préférentiellement l'évaporation du sel a) et/ou la filtration de l'oxyde correspondant au sel a).

Aspect 13. Procédé selon l'une quelconque des aspects précédents, comprenant une étape de purification du(des) chlorure(s) d'actinide(s), ladite purification comprenant préférentiellement l'évaporation de l'$AlCl_3$ résiduel et/ou la filtration de l'oxyde d'aluminium $Al_2O_3$.

Aspect 14. Utilisation d'un sel d'aluminium (1), d'un sel de silicium (II) et/ou d'un sel de béryllium (III) :

$$M_{x1}Al_{y1}X_{z1} \qquad (I)$$

$$M_{x2}Si_{y2}X_{z2} \qquad (II)$$

$$M_{x3}Be_{y3}X_{z3} \qquad (III)$$

selon lesquelles :

M est un métal alcalin et/ou un alcalino-terreux, de préférence Na, K et/ou Li,

X est un halogène (i.e., Cl, F, I et Br), de préférence Cl ou F,

$0 \le x1 \le 10$, $1 \le y1 \le 2$, $1 \le z1 \le 13$, $0 \le x2 \le 10$, $1 \le y2 \le 2$, $4 \le z2 \le 14$, $0 \le x3 \le 10$, $1 \le y3 \le 2$, et $2 \le z3 \le 12$,

pour la synthèse de chlorure(s) d'actinide(s) à partir d'oxyde(s) d'actinide(s) dans un sel fondu combustible pour réacteurs de fission nucléaire à sels fondus (RSF).

Aspect 15. Utilisation selon l'aspect 14, selon laquelle le sel (1), (II) et/ou (III) est choisi parmi le chlorure d'aluminium $AlCl_3$, le chlorure d'aluminium $Al_2Cl_6$, le chlorure d'aluminium $KAlCl_4$, le chlorure d'aluminium $NaAlCl_4$, le chlorure d'aluminium $LiAlCl_4$, le chlorure de béryllium $BeCl_2$, le chlorure de béryllium $KBeCl_3$, le chlorure de béryllium $NaBeCl_3$, le chlorure de béryllium $LiBeCl_3$, ou un mélange de deux ou plusieurs de ces chlorures.

Aspect 16. Utilisation du chlorure d'aluminium $AlCl_3$ pour la synthèse de chlorure(s) d'actinide(s) à partir d'oxyde(s) d'actinide(s) dans un sel fondu combustible pour réacteurs de fission nucléaire à sels fondus (RSF).

Aspect 17. Utilisation selon l'un quelconque des aspects 14-16, caractérisée en ce que la synthèse est réalisée à une température comprise entre 100 et 850°C, entre 120 et 500°C ou entre 150 et 300°C.

Aspect 18. Utilisation selon l'un quelconque des aspects 14-17, caractérisée en ce que la synthèse est réalisée en présence d'au moins un sel de chlorure d'un métal alcalin et/ou alcalino-terreux distinct des sels (1), (II) et/ou (III), par exemple le chlorure de sodium NaCl, le chlorure de calcium $CaCl_2$, le chlorure de magnésium $MgCl_2$, le chlorure de potassium KCl, le chlorure de lithium LiCl, le chlorure de béryllium $BeCl_2$, ou un mélange de deux ou plusieurs de ces chlorures.

EXEMPLES

L'invention va maintenant être décrite plus en détail en référence aux exemples suivants, dont le but est simplement illustratif et non destiné à limiter la portée de l'invention.

**Exemple 1 : synthèse de $CeCl_3$ à partir de $CeO_2$ dans le mélange fondu $NaCl$-$AlCl_3$ (40-60 mol.%) à 150°C**

L'équation 3 ci-dessous représente la réaction de chloration :

$$6CeO_2 + 8AlCl_3 \rightarrow 6CeCl_3 + 4Al_2O_3 + 3Cl_{2(g)} \; avec \; \Delta G° = \text{-}1102,324 \; kJ.mol^{-1} \; \text{à } 150°C \qquad \text{(eq. 2)}$$

La préparation de 100 g de sel NaCl-AlCl₃ (40-60 mol.%) a été effectuée dans une boîte à gants afin d'éviter tout contact avec l'humidité de l'air ambiant. AlCl₃, en présence d'eau, subit une hydrolyse partielle, produisant du chlorure d'hydrogène. Le protocole de fusion est présenté dans le tableau 1.

Tableau 1 : étapes de fusion NaCl -AlCl₃ (40-60 mol.%)

| Étape | Température (°C) | Atmosphère | Durée (h) | Aspect du sel |
|-------|-----------------|------------|-----------|---------------|
| 0 | ambiante | argon | - | Poudre non fondue |
| 1 | 90 | argon | 3 | Poudre non fondue |
| 2 | 150 | sans flux | Jusqu'à fusion complète | Liquide transparent jaune - marron |
| 3 | 150 | argon | - | Liquide transparent jaune - marron |

Dans le cadre de cet essai, une quantité de 1,557 g de CeO₂ correspondant à 1 mol.% a été ajoutée au sel fondu NaCl-AlCl₃ à 150°C. Pendant une période de 2 heures, à un débit de 60 ml/min, de l'argon a été injecté directement dans le sel à travers un tube en pyrex, agissant comme un agitateur pour accélérer le processus de chloration. Après cette étape, le sel a été placé sous flux d'argon à un débit de 3 mL/min pour permettre la décantation des précipités solides.

Un échantillon a ensuite été prélevé pour une analyse par ICP afin de déterminer la quantité de Ce dissous, en utilisant une barre de nickel (le sel cristallise sur le barreau en nickel froid lors de son introduction dans le sel).

Les résultats des analyses ICP présentés dans le tableau 2 révèlent que la concentration en Ce dissous mesurée par ICP est cohérente avec la valeur théorique prévue.

Tableau 2 : Résultats ICP des échantillons prélevés après ajout de CeO₂ dans le sel NaCl-AlCl₃

| mCeO₂ (g) ajoutée | mCeCl₃ (g) dans le sel fondu (théorique) | [Ce] (ppm) dissous théorique | [Ce] par ICP (ppm) |
|-------------------|------------------------------------------|------------------------------|--------------------|
| 1,557 | 2,231 | 12,5 | 10,35 |

**Exemple 2 : synthèse 50g de mélange NaCl-CeCl₃ (73-27 mol%) à 300°C**

Dans cet essai, 50g de sel NaCl-AlCl₃ de composition 57,1 mol.% NaCl-42,9 mol.% AlCl₃ a été utilisée pour réaliser la synthèse Tableau 3).

Tableau 3 : Composition du mélange NaCl-AlCl₃ utilisé pour la synthèse

|  | m (g) | M (g.mol⁻¹) | (% mol) | n (mol) |
|------|-------|-------------|---------|---------|
| NaCl | 18,425 | 58,4 | 57,1 | 0,315 |
| AlCl₃ | 31,584 | 133,3 | 42,9 | 0,237 |
| Total | 50 | / | 100 | 0,552 |

Une quantité de CeO₂ égale à 30,537 g a été ajoutée afin de réagir complètement avec 0,237 mol d'AlCl₃. L'objectif de cet essai était d'évaluer le taux de conversion en utilisant la quantité minimale d'AlCl₃, de sorte qu'à la fin de la manipulation, il ne reste que de l'Al₂O₃ à éliminer.

Une fois CeO₂ ajouté, la température a été augmentée progressivement jusqu'à 600 °C pendant 4 heures, puis maintenue à 600 °C pendant 15 heures. Ensuite, le sel a été cristallisé sous argon.

Une fois cristallisé, trois échantillons de sel ont été prélevés pour effectuer une analyse ICP. Les résultats de l'ICP ont montré une concentration moyenne de 2,51 ppm de Ce, comparée aux 3,84 ppm théoriques en cas de conversion totale. Cela correspond à un taux de conversion de 65 %. La composition NaCl-CeCl₃ a été recalculée en tenant compte de ce résultat en considérant que l'AlCl₃ a été totalement évaporé.

Tableau 4 : Composition du mélange finale calculée à partir des résultats d'analyse ICP

| Exp-(D'après ICP) | m (g) | M (g.mol⁻¹) | (% mol) | n (mol) |
|-------------------|-------|-------------|---------|---------|
| NaCl | 18,425 | 58,4 | 73,18 | 0,315 |

(suite)

| Exp-(D'après ICP) | m (g) | M (g.mol$^{-1}$) | (% mol) | n (mol) |
|---|---|---|---|---|
| CeCl$_3$ | 28,480 | 246,5 | 26,82 | 0,116 |
| Total | 46,905 | / | 100 | 0,431 |

**Revendications**

1. Procédé de synthèse de chlorure(s) d'actinide(s) à partir d'oxyde(s) d'actinide(s) présent(s) dans un sel fondu, ledit procédé mettant en oeuvre :

   a) au moins un sel d'aluminium (1), un sel de silicium (II) et/ou un sel de béryllium (III) :

   $$M_{x1}Al_{y1}X_{z1} \qquad (I)$$

   $$M_{x2}Si_{y2}X_{z2} \qquad (II)$$

   $$M_{x3}Be_{y3}X_{z3} \qquad (III)$$

   selon lesquelles :

   M est un métal alcalin et/ou un alcalino-terreux, de préférence Na, K et/ou Li,
   X est un halogène, de préférence Cl ou F,

   $0 \leq x1 \leq 10$, $1 \leq y1 \leq 2$, $1 \leq z1 \leq 13$, $0 \leq x2 \leq 10$, $1 \leq y2 \leq 2$, et $4 \leq z2 \leq 14$, $0 \leq x3 \leq 10$, $1 \leq y3 \leq 2$, et $2 \leq z3 \leq 12$,

   b) optionnellement au moins un sel de chlorure d'un métal alcalin et/ou alcalino-terreux distinct des sels (1), (II) et/ou (III),

   ledit procédé comprenant la chloration de(s) l'oxyde(s) d'actinide(s) en chlorure(s) d'actinide(s) correspondant, au sein dudit sel à l'état fondu.

2. Procédé selon la revendication 1, selon lequel le sel a) est mis en oeuvre sous forme solide ou sous forme liquide (fondue), seul ou en mélange avec le sel b), celui-ci étant également sous forme solide ou sous forme liquide (fondue).

3. Procédé selon la revendication 1, selon lequel le sel a) est mis en oeuvre sous forme gazeuse au sein du sel à l'état fondu.

4. Procédé selon l'une quelconque des revendications précédentes, selon lequel le sel fondu comprend de 1 à 80 mol.% de sel a), par rapport au nombre total de moles de sels a) et b).

5. Procédé selon l'une quelconque des revendications précédentes, selon lequel le sel a) est choisi parmi le chlorure d'aluminium AlCl$_3$, le chlorure d'aluminium Al$_2$Cl$_6$, le chlorure d'aluminium KAlCl$_4$, le chlorure d'aluminium NaAlCl$_4$, le chlorure d'aluminium LiAlCl$_4$, le chlorure de béryllium BeCl$_2$, le chlorure de béryllium KBeCl$_3$, le chlorure de béryllium NaBeCl$_3$, le chlorure de béryllium LiBeCl$_3$, ou un mélange de deux ou plusieurs de ces chlorures.

6. Procédé selon l'une quelconque des revendications précédentes, selon lequel le sel b) est choisi parmi le chlorure de sodium NaCl, le chlorure de calcium CaCl$_2$, le chlorure de magnésium MgCl$_2$, le chlorure de potassium KCl, le chlorure de lithium LiCl, le chlorure de béryllium BeCl$_2$, ou un mélange de deux ou plusieurs de ces chlorures.

7. Procédé selon l'une quelconque des revendications précédentes, selon lequel l'actinide est choisi parmi l'uranium, le plutonium, l'américium et le thorium, seul ou en mélange.

8. Procédé selon l'une quelconque des revendications précédentes, **caractérisé en ce que** la synthèse est opérée à une température comprise entre 100 et 850°C, entre 120 et 500°C ou entre 150 et 300°C.

9. Procédé selon l'une quelconque des revendications précédentes, comprenant une étape de purification du(des) chlorure(s) d'actinide(s), ladite purification comprenant préférentiellement l'évaporation du sel a) et/ou la filtration de l'oxyde correspondant au sel a).

10. Utilisation d'un sel d'aluminium (1), d'un sel de silicium (II) et/ou d'un sel de béryllium (III) :

$$M_{x1}Al_{y1}X_{z1} \qquad (I)$$

$$M_{x2}Si_{y2}X_{z2} \qquad (II)$$

$$M_{x3}Be_{y3}X_{z3} \qquad (III)$$

selon lesquelles :

M est un métal alcalin et/ou un alcalino-terreux, de préférence Na, K et/ou Li,
X est un halogène, de préférence Cl ou F,

$0 \leq x1 \leq 10$, $1 \leq y1 \leq 2$, $1 \leq z1 \leq 13$, $0 \leq x2 \leq 10$, $1 \leq y2 \leq 2$, $4 \leq z2 \leq 14$, $0 \leq x3 \leq 10$, $1 \leq y3 \leq 2$, et $2 \leq z3 \leq 12$,

pour la synthèse de chlorure(s) d'actinide(s) à partir d'oxyde(s) d'actinide(s) dans un sel fondu combustible pour réacteurs de fission nucléaire à sels fondus (RSF).

**Europäisches Patentamt**
**European Patent Office**
**Office européen des brevets**

# RAPPORT DE RECHERCHE EUROPEENNE

**Numéro de la demande**

EP 24 31 5422

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | US 2 948 586 A (MOORE RAYMOND H) 9 août 1960 (1960-08-09) * le document en entier * ----- | 1-10 | INV. C01F15/00 C01G43/08 C01G56/00 |
| X | VOLKOVICH V.A. ET AL: "Structures of chloro-uranium species in molten LiCl-BeCl2 eutectic: A combined X-ray and electronic absorption spectroscopy study", JOURNAL OF NUCLEAR MATERIALS, vol. 344, no. 1-3, 1 septembre 2005 (2005-09-01), pages 100-103, XP093256340, NETHERLANDS ISSN: 0022-3115, DOI: 10.1016/j.jnucmat.2005.04.024 Extrait de l'Internet: URL:https://pdf.sciencedirectassets.com/27 1598/1-s2.0-S0022311505X06109/1-s2.0-S0022 311505002072/main.pdf?hash=0ce6572740e672f ac56c919acb36a39ed70693843522377ce47d3e89e 7a10233&host=68042c943591013ac2b2430a89b27 0f6af2c76d8dfd086a07176afe7c76c2c61&pii=S0 022311505002072&tid=spdf-17e51c68-cd2d-484 6-881c-39f> * le document en entier * ----- -/-- | 1-10 | G21C3/54 C01F17/271 |

**DOMAINES TECHNIQUES RECHERCHES (IPC)**

C01F
G21C
C01G

Le présent rapport a été établi pour toutes les revendications

| Lieu de la recherche | Date d'achèvement de la recherche | Examinateur |
|---|---|---|
| Munich | 6 mars 2025 | Marucci, Alessandra |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
........................................................................
& : membre de la même famille, document correspondant

EPO FORM 1503 03.82 (P04C02)

page 1 de 2

Europäisches
Patentamt

European
Patent Office

Office européen
des brevets

## RAPPORT DE RECHERCHE EUROPEENNE

**Numéro de la demande**

EP 24 31 5422

### DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| A | LIU YA-LAN ET AL: "Extraction of thorium from LiCl-KCl molten salts by forming Al-Th alloys: a new pyrochemical method for the reprocessing of thorium-based spent fuels", RSC ADVANCES, vol. 3, no. 45, 1 janvier 2013 (2013-01-01), page 23539, XP093256431, GB ISSN: 2046-2069, DOI: 10.1039/c3ra43292k Extrait de l'Internet: URL:https://pubs.rsc.org/en/content/articlepdf/2013/ra/c3ra43292k> * abrégé * | 1-10 | |

-----

**DOMAINES TECHNIQUES RECHERCHES (IPC)**

Le présent rapport a été établi pour toutes les revendications

| Lieu de la recherche | Date d'achèvement de la recherche | Examinateur |
|---|---|---|
| Munich | 6 mars 2025 | Marucci, Alessandra |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
..............................................................................
& : membre de la même famille, document correspondant

EPO FORM 1503 03.82 (P04C02)

page 2 de 2

## ANNEXE AU RAPPORT DE RECHERCHE EUROPEENNE
## RELATIF A LA DEMANDE DE BREVET EUROPEEN NO.

EP 24 31 5422

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

06-03-2025

| Document brevet cité au rapport de recherche | Date de publication | Membre(s) de la famille de brevet(s) | Date de publication |
|---|---|---|---|
| US 2948586       A | 09-08-1960 | DE      1118770 B<br>FR      1229237 A<br>GB       870691 A<br>US      2948586 A | 07-12-1961<br>05-09-1960<br>14-06-1961<br>09-08-1960 |

EPO FORM P0460

Pour tout renseignement concernant cette annexe : voir Journal Officiel de l'Office européen des brevets, No.12/82